# EUROPEAN PATENT APPLICATION

(11) **EP 3 293 949 A1**
(43) Date of publication of application: **14.03.2018**
(21) Application number: 17188798.7
(22) Date of filing: 31.08.2017
(51) Int. Cl.: H04L 29/12, H04L 29/14

(54) **METHOD AND DEVICE ADAPTED TO BE IMPLEMENTED AT A LOCAL NETWORK EQUIPMENT**

(30) Priority: 12.09.2016 EP 16306147
(71) Applicant: Thomson Licensing, 92130 Issy-les-Moulineaux (FR)
(72) Inventor: ONNO, Stéphane, 35576 Cesson-Sevigne (FR); LEGALLAIS, Yvon, 35576 Cesson-Sevigne (FR); HAVET, Ludovic, 35576 Cesson-Sevigne (FR)
(74) Representative: Morain, David

(57) **Abstract**

Method adapted to be implemented at a local network equipment (104) configured to be attached to a remote network equipment (100) through a network connection (101), said remote network equipment running a first network function (220), wherein the method comprises:
- updating (405) second configuration information with first configuration information received (410) from the remote network equipment (100);
- when the network connection (101) is interrupted,
▪ launching (406) a second network function at the local network equipment (104) based on updated second configuration information;
▪ updating (407) second configuration information from the operation of the second network function running at the local network equipment;

- when the network connection (101) is recovered after interruption:
▪ sending (409) to the remote network equipment (100) last updated second configuration information,
▪ aborting (409) the second network function running at the local network equipment (104).

## Description

### TECHNICAL FIELD

The present disclosure generally relates to the network virtualization and more particularly to network virtualization services and functions associated with cloud commodity computing hardware.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A residential or corporate gateway is a network equipment interfacing a LAN (Local Area Network) to the Internet. Such an equipment may usually provide - in addition to being a cable, DSL (Digital Subscriber Line) or fiber modem - different features like router, DNS (Domain Name System) proxy, local DHCP (Dynamic Host Configuration Protocol) server, wireless access point, firewall, DynDNS, bridge, etc.

The development of the cloud technologies (such as the virtualization of network functions) allows the emergence of a new architecture for Internet access wherein services running in the residential gateway are moved in the NSP's (Network Service Provider) datacenter. By reducing the complexity of the residential gateway, NSPs hope to reduce the time to market to deploy new services and to ease troubleshooting operations.

Networking Function Virtualization (NFV) enables the provision of network functions for home or corporate gateways directly from the NSP's facility in a cloud provisioning manner. Virtual Customer Premise Equipment (VCPE) is part of the so called Network Function Virtualization paradigm that is about executing network functions (e.g. Router, Deep Packet Inspection, DNS server, Firewall) onto commoditized hardware hosting a virtual machine infrastructure (e.g. private or public cloud infrastructure) instead of requiring specific dedicated hardware. To that end, the home gateway acts as a bridge (BRG) and needs to connect to a virtual gateway (vG) in the cloud to reach the hosts where the network functions are provisioned and run, even for basic functions such as DHCP, Firewall, DNS and UI (User Interface).

Nevertheless, the virtualization of network functions (such as DHCP, DNS, User Interface, etc.) raises some issues, since these functions must be available even if the link between the customer's home gateway and the virtual gateway in the NSP's datacenter is broken. Indeed, it is sometimes not possible to reach the virtualized network functions because the home gateway is not provisioned or connected to the virtual gateway vG anymore. DHCP is such a network function service that has to be supplied whenever the connection is established, down or re-established. In home network, a DHCP server allocates IP address and other related configuration information such as the subnet mask and default gateway to devices. IP addresses are assigned for a given duration. The DHCP server automatically stores information for every IP address recently allocated, including to whom (the MAC address) the IP address has been assigned, the start and end date for the lease, the network interface card that was used to retrieve the lease, etc. When a DHCP server in charge of a Local Area Network (LAN) is replaced by another one, the lease information is lost and previously assigned IP addresses can be issued to new incoming devices. This can lead to address conflicts when devices are assigned the same IP address.

Therefore, there is a need to overcome at least the above mentioned drawbacks and provide a service continuity in case of disconnection.

### SUMMARY

The disclosure concerns a method adapted to be implemented at a local network equipment configured to be attached to a remote network equipment through a network connection, said remote network equipment running a first network function, wherein said method comprises:
- updating second configuration information with first configuration information received from the remote network equipment;
- when the network connection is interrupted,
   ▪ launching a second network function at the local network equipment based on updated second configuration information;
   ▪ updating second configuration information from the operation of the second network function running at the local network equipment;
- when the network connection is recovered after interruption:
   ▪ sending to the remote network equipment last updated second configuration information,
   ▪ aborting the second network function running at the local network equipment.

Thanks to the present disclosure, the method can provide a service continuity in case of failure of the network link between the local network equipment and the remote network equipment.

In an embodiment, launching the second network function can comprise starting a corresponding local network server.

In an embodiment, said method can comprise preliminary subscribing, by the local network equipment, for receiving first configuration information from the remote network equipment.

In an embodiment, the first network function and the second network function can correspond to a DHCP function.

In said embodiment, first and second configuration information can comprise at least one of the following parameters associated with assigned IP addresses:
- leases,
- subnet,
- subnet-mask,
- default lease time,
- maximum lease time,
- MAC address.

In an embodiment, the local network equipment can be a residential gateway and the remote network equipment can be a virtual gateway.

The present disclosure is further directed to a local network equipment adapted to be attached to a remote network equipment through a network connection, said remote network equipment running a first network function. Said local network equipment comprises at least one memory and at least one processing circuitry configured to perform:
- updating second configuration information with first configuration information received from the remote network equipment;
- when the network connection is interrupted,
   ▪ launching a second network function at the local network equipment based on updated second configuration information;
   ▪ updating second configuration information from the operation of the second network function running at the local network equipment;
- when the network connection is recovered after interruption:
   ▪ sending to the remote network equipment last updated second configuration information,
   ▪ aborting the second network function running at the local network equipment.

Besides, the present disclosure also concerns a local network equipment adapted to be attached to a remote network equipment through a network connection, said remote network equipment running a first network function, wherein the local network equipment comprises:
- a communication interface for receiving first configuration information from the remote network equipment;
- a local network agent configured for, when the network connection is interrupted:
   ▪ updating second configuration information with the received first configuration information and for launching a second network function at the local network equipment, based on updated second configuration information
   ▪ updating second configuration information from the operation of the second network function running at the local network equipment,
   and wherein when the network connection is recovered after interruption:
- the communication interface is further configured for sending to the remote network equipment last updated second configuration information,
- the local network agent is further configured for aborting the second network function running at the local network equipment.

In an embodiment, the local network agent can be configured to activate a local network server of the local network equipment, in order to launch the second network function.

In an embodiment, the local network agent can be configured for preliminary subscribing for receiving first configuration information from the remote network equipment.

In an embodiment, the first network function and the second network function can correspond to a DHCP function.

The present disclosure further concerns a non-transitory program storage device, readable by a computer, tangibly embodying a program of instructions executable by the computer to perform a method adapted to be implemented at a local network equipment configured to be attached to a remote network equipment through a network connection, said remote network equipment running a first network function, wherein said method comprises:
- updating second configuration information with first configuration information received from the remote network equipment;
- when the network connection is interrupted,
   ▪ launching a second network function at the local network equipment based on updated second configuration information;
   ▪ updating second configuration information from the operation of the second network function running at the local network equipment;
- when the network connection is recovered after interruption:
   ▪ sending to the remote network equipment last updated second configuration information,
   ▪ aborting the second network function running at the local network equipment.

In addition, the present disclosure also involves a computer program product stored on a non-transitory computer readable medium and comprising program code instructions executable by a processor for implementing a method adapted to be implemented at a local network equipment configured to be attached to a remote network equipment through a network connection, said remote network equipment running a first network function, wherein said method comprises:
- updating second configuration information with first configuration information received from the remote network equipment;
- when the network connection is interrupted,
   ▪ launching a second network function at the local network equipment based on updated second configuration information;
   ▪ updating second configuration information from the operation of the second network function running at the local network equipment;
- when the network connection is recovered after interruption:
   ▪ sending to the remote network equipment last updated second configuration information,
   ▪ aborting the second network function running at the local network equipment.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the above mentioned method.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of an overall architecture of network equipment adapted to implement some embodiments of the present principles;
- Figure 2 shows a schematic diagram of an example of network equipment of some embodiments of the present principles;
- Figure 3 depicts a flow chart diagram of an exemplary method performed by a virtual gateway according to the present principles;
- Figure 4 shows a flow chart diagram of an exemplary method performed by a broadband residential gateway according to the present principles.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

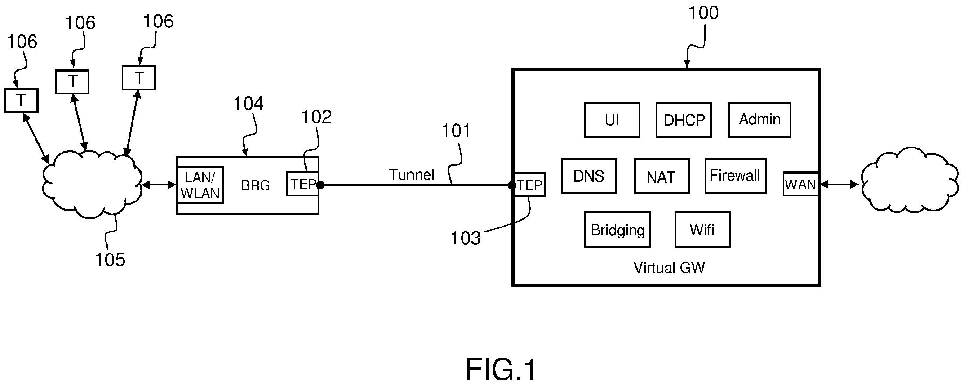

Figure 1 is a schematic diagram of an example of an overall architecture 100 of a remote network equipment 100, such as a virtual gateway (vG) or a virtual customer premise equipment (VCPE) and of a local network equipment 104, such as a broadband residential gateway (BRG). It is assumed that the gateway functionality is split in two parts, interconnected by mean of a tunnel 101, each part hosting a tunnel endpoint (TEP) 102, 103. This tunnel can be used to abstract from the underlying physical network topology while interconnecting the broadband residential gateway (BRG) 104 (also called bridge or switch) and the virtual gateway (vG) 100 at the link layer.

The left hand side (represented by the broadband residential gateway 104 (BRG)) can be considered, in one embodiment, to be at the customer's premises, whereas the right hand side (represented by the virtual gateway 100) can be located in a datacenter hosted, for instance, by a network operator. This datacenter can be distributed across multiple locations. In one embodiment, virtualized gateway functions can be shared (or mutualized) to facilitate scaling and maintenance. The BRG 104 can be connected to a home (or business) network 105 (e.g. private network) such a LAN (Local Area Network) or WAN (Wide Area Network).

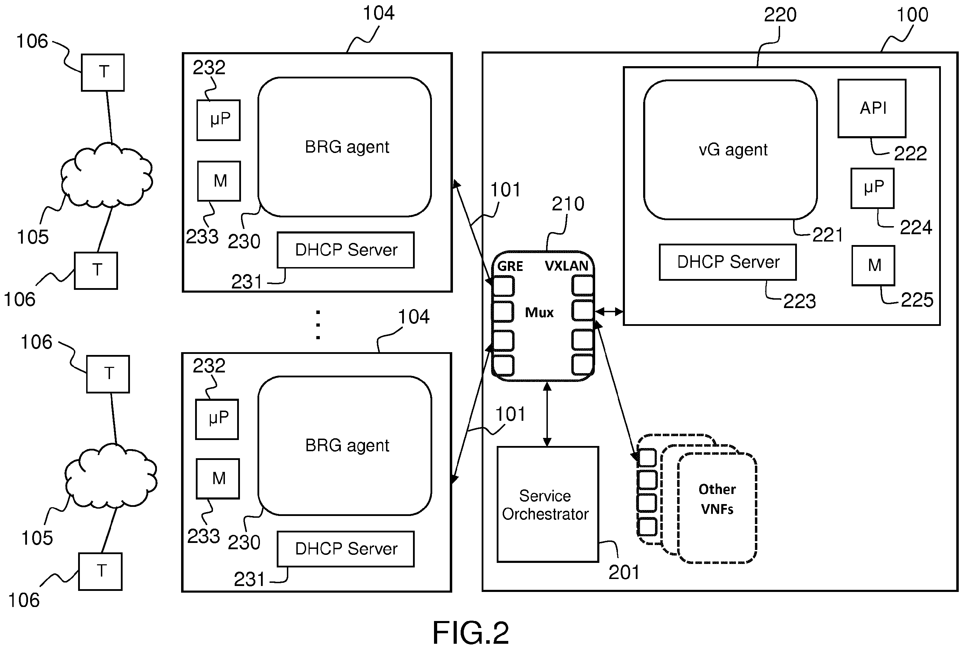

Virtual gateway deployment can be managed by a service orchestrator 201 (shown in Figure 2) which coordinates the computing and networking configuration from the broadband residential gateway 104 to the datacenter so as to manage virtual gateway migration, service addition/removal or adjustment of QoS policies.

As shown in Figure 1, the virtual gateway 100 can execute network functions such as UI (User Interface), DHCP server, DNS server, Firewall, NAT (Network Address Translation), bridging, Wi-Fi, etc.

Figure 2 is a block diagram of one embodiment of the present principles, depicting a virtual gateway 100 configured to implement a DHCP virtual network function (VNF). For sake of clarity and simplicity, some elements of the virtual gateway are not shown in Figure 2. Naturally, the disclosure is not limited to the DHCP protocol, function or service, but can be applied to other network protocols, functions services.

The virtual gateway 100 can be connected to one or several broadband residential gateways 104, each BRG 104 being further adapted to be connected to a LAN 105 comprising one or several terminals 106. The communication between modules of the virtual gateway 100 can be performed asynchronously, i.e. by using Redis Bus (not shown in the Figures).

As shown in Figure 2, at the input in the datacenter, a multiplexing function (MUX) 210 of the virtual gateway 100 can be provided to ensure connectivity between a physical broadband residential gateway 104 and the associated virtual gateway functions. The multiplexing function (MUX) 210 can be configured by the orchestrator 201 with the customer's settings. This function can be implemented, for example, by a programmable switch, which may also provide connectivity to the WAN and cloud hosted services. In one embodiment, it is assumed this to be a large capacity switching arrangement, possibly assisted by dedicated hardware. It can handle the termination of the tunnel towards the BRG 104 and can re-encapsulate the traffic towards the peer vG services or tag the traffic with a customer ID before passing it to a shared service. As shown in the embodiment of Figure 1, the multiplexing function 210 can implement a tunnel end point (TEP) 103 and can re-encapsulate the traffic in a dedicated VxLAN (Virtual Extensible Local Area Network) for each customer.

Configuring the switching according to rules derived from customer specific preferences can allow building a service chain, connecting inputs and outputs of services. At a high level, gateway directed traffic can be switched to the adequate services (DHCP, DNS), whereas WAN directed traffic is switched toward NAT or firewall services.

Each service can be shared and parameterized with customer settings or implemented as a dedicated customer specific service. In such a manner, new services can be tested with a subset of customers before being fully deployed and shared. For computing based shared services, using the VxLAN id as a derivation from the customer id (identifier) can allow retrieving the customer's context from a central database. For networking based services, the orchestrator is able to configure per customer-differentiated services, which can rely on the VxLAN id for flow differentiation. Finally, different overlays can be built for each VxLAN id, resulting in customer tailored service chaining. It is to be understood that the customer id identifier can be carried in a specific field of the encapsulation header of the overlay network such as VXLANs/VXLAN-GPE Identifier, GRE Identifier and so forth. It should be noted that other encapsulation techniques can be used, such as the Network Service Header (NSH) mechanism which enables service chaining features, i.e. the ability to steer the traffic to a chain of functions depending on inner or outer received packet payload.

The BRG 104 can be built around its own switching fabric (e.g., switching arrangement or configuration such as a switching matrix), that interconnects the different network ports. The BRG 104 can implement in particular the logic for enabling Generic Routing Encapsulation (GRE) tunneling between the BRG 104 and a VCPE host (not shown). The GRE tunneling can be configured through an existing procedure (consecutively to a provisioning operation realized by the operator) like the one specified by Broadband Forum. Once the BRG 104 is connected to the access network, after the physical attachment (e.g. xDSL), the BRG 104 can broadcast a DHCP request. This is caught by the DHCP server residing in the first upstream IP enabled device, which may be the Broadband Network Gateway (BNG, the old BRAS). The DHCP server (more exactly its associated AAA server) can authenticate the BRG 104 thanks to its MAC (Media Access Control) address and return the corresponding configuration. This corresponding configuration can include the BRG IP address and the GRE tunnel endpoint IP address that is the IP address of the virtual machine hosting the tunnel end point (TEP) virtual function of the virtual gateway 100.

Once the network configuration is obtained, the BRG 104 can be configured to provide tunnel access (e.g. a GRE tunnel interface) while the virtual gateway 100 can be automatically configured in the virtual gateway host infrastructure.

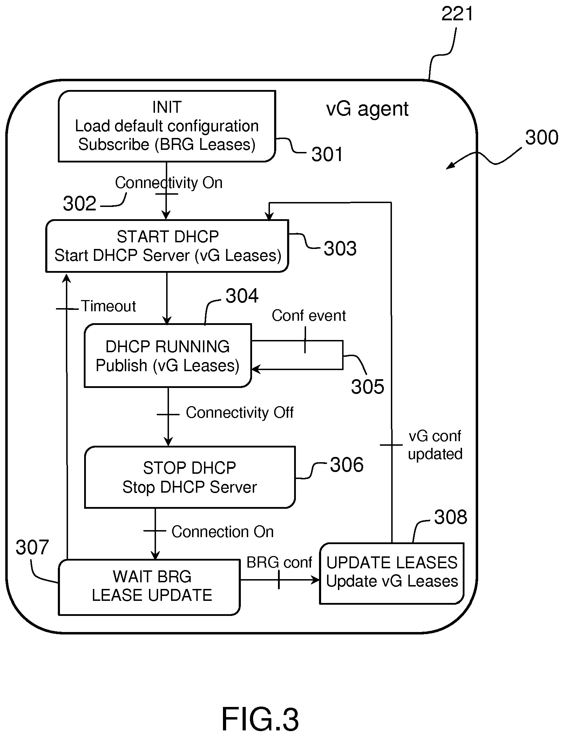

As shown in the embodiment of Figure 2, in order to implement a DHCP virtual network function 220, the virtual gateway 100 can comprise a DHCP agent 221 (also called vG agent), an Application Programming Interface (API) 222 for managing the DHCP functionality for a set of BRGs 104, a DHCP server 223, a processor 224 and a memory 225. The processor 224 is configured for processing various data and for controlling various function and components of the virtual gateway 100. The memory 225 of the virtual gateway 100 may represent both a transitory memory such as RAM, and a non-transitory memory such as a ROM, a hard drive or a flash memory, for processing and storing different files and information as necessary, including computer program products and software (e.g. for performing a method as represented by a flow chart diagram of Figure 3 to be discussed below).

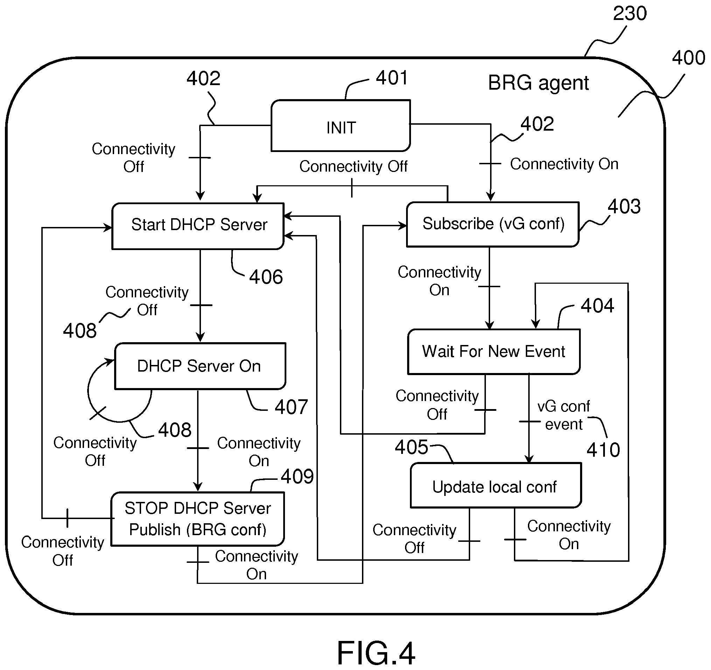

In addition, to further implement the principles of the disclosure, the broadband residential gateway 104 can comprise a DHCP agent 230 (also called BRG agent), a DHCP server 231 to operate a DHCP function when the connection between the virtual gateway 100 and the broadband residential gateway 104 is interrupted, a processor 232 and a memory 233. The processor 232 is configured for processing various data and for controlling various function and components of the BRG 104. The memory 233 of the virtual gateway 100 may represent both a transitory memory such as RAM, and a non-transitory memory such as a ROM, a hard drive or a flash memory, for processing and storing different files and information as necessary, including computer program products and software (e.g. for performing a method as represented by a flow chart diagram of Figure 4 to be discussed below).

In Figure 2, it is to be appreciated that the illustrated blocks or modules correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

Figure 3 shows a flow chart diagram of an exemplary method 300 for operating a DHCP function at the virtual gateway 100 according to the present principles. To this end, the vG agent 221 of the virtual gateway 100 is configured or operative to carry out the following steps of the method 300.

At step 301, the vG agent 221 can be initialized with a default configuration loaded, for instance, from the memory 225 (or from the DHCP server 223) and can start with a connect state or a disconnect state. This default configuration can comprise information to communicate with other elements, such as the address of the BRG agent 230, protocol parameters for publishing or subscribing information between agents, etc.

The vG agent 221 can further subscribe (step 301), to the BRG agent 230, for receiving address configuration from the BRG 104 (hereinafter BRG address configuration). A BRG address configuration can comprise leases, subnet, subnet-mask, default lease time, maximum lease time, MAC address, etc., associated with IP addresses assigned by the DHCP server 231 of the BRG 104. The BRG address configuration can be published, by the BRG 104, upon a connect recovery event (e.g. the re-establishment of the connection between the BRG 104 and the virtual gateway 100, after interruption).

After step of initialization (step 301), the vG agent 221 can check (step 302) whether the connection between the BRG 104 and the virtual gateway 100 is established.

When such a connection is established (the tunnel 101 between the BRG 104 and the virtual gateway 100 is working), the vG agent 221 can activate (step 303) the DHCP server 223 to run the DHCP service on the virtual gateway 100 for that given BRG 104. Thus, the DHCP server 223 can allocate (step 304) IP addresses upon request from terminals 106 of the network 105 of the BRG 104 thanks to the DHCP two steps process. Configuration information (leases, subnet, subnet-mask, default lease time, maximum lease time, MAC address, etc.) associated with the allocated IP addresses by the DHCP server 223 is gathered in a vG address configuration (also called main address configuration), for instance, stored in the memory 225 (or, as a variant, in the DHCP server 223). Every time configuration information is updated, the vG address configuration is updated. The vG address configuration can be published (step 305) by the vG agent 221 to let the BRG 104 be aware of the update of the configuration information performed by the DHCP server 223 (when said BRG 104 has subscribed for receiving the vG address configuration). Such a publication can be done periodically, upon a lease event (such as add a new lease, modify a previous lease, delete a previous lease, etc.), etc. In an embodiment, only update of the vG address configuration can be published.

Upon a disconnection event (e.g. the connection between the BRG 104 and the virtual gateway 100 is interrupted), the vG agent 221 can stop (step 306) operating the DHCP server 223 for that particular BRG 104. In that case, the DHCP service for that BRG 104 is interrupted at the vG 100.

Upon a connection event (such as the re-establishment of the connection between the considered BRG 104 and the virtual gateway 100), the vG agent 221 can wait (step 307) for the reception of the BRG address configuration (as discussed hereinafter) published by the BRG 104. The connection event can trigger a timeout until which the vG agent 221 is in a waiting state. When no address configuration has been received at the end of the timeout indicates that no lease has been renewed or assigned during the interruption of connection between the BRG 104 and the virtual gateway 100.

When a BRG address configuration is received from the BRG 104, the vG agent 221 can update (step 308) its vG address configuration with the configuration information of the received BRG address configuration and can further re-activate the DHCP server 223 (the method 300 goes back to step 303). In addition, the updated vG address configuration can be published by the vG agent 221 and delivered to the BRG 104.

Figure 4 depicts a flow chart diagram of an exemplary method 400 for operating a DHCP function at the broadband residential gateway 104 according to the principles of the disclosure. The BRG agent 230 of the BRG 104 is configured or operative to perform the following steps of the method 400.

At step 401, the BRG agent 230 can be initialized with a default configuration (e.g. stored in the memory 233 or in the DHCP server 231) and can be able to start with a connect state or a disconnect state.

After initialization (step 401), the BRG agent 230 can monitor (step 402) whether or not the connection between the BRG 104 and the virtual gateway 100 is established.

When such a connection is established (corresponding to a connect state), the BRG agent 230 can subscribe (step 403), to the vG agent 221, for receiving address configuration from the virtual gateway 100 (hereinafter vG address configuration). As for the BRG address configuration, a vG address configuration can comprise leases, subnet, subnet-mask, default lease time, maximum lease time, MAC address, etc., associated with IP addresses assigned by the DHCP server 223 of the virtual gateway 100. As previously mentioned, the vG address configuration can be published, by the virtual gateway 100, periodically, upon a lease event, upon a connect recovery event, etc.

When the connection between the BRG 104 and the virtual gateway 100 is established, the BRG 104 can wait (step 404) for receiving a disconnect event (when the connection is interrupted) or a vG address configuration (corresponding for instance to a lease event).

Upon receipt of a vG address configuration from the virtual gateway 100 (step 410), the BRG agent 230 can update (step 405) the BRG address configuration locally stored (e.g. in the memory 233 or in the DHCP server 231), based on the configuration information of the vG configuration. When the connection between the BRG 104 and the vG 100 is still working, the BRG agent 230 can go back to the waiting step 405.

When the connection between the BRG 104 and the vG 100 is interrupted, the BRG agent 230 can trigger (step 406) the DHCP server 231 of the BRG 104 to activate the local DHCP service (step 407). In that case, while the local DHCP service is running, when a terminal 106 is joining the LAN 105 of the BRG 104 (i.e. the terminal 106 is connecting to the BRG 104), the DHCP server 231 can either renew the lease previously assigned by the DHCP function of the virtual gateway 100 or can offer a new lease which is saved. The BRG address configuration is updated accordingly. Concurrently, the DHCP server 223 of the vG 100 can be inactivated (step 306) for that given BRG 104, so that only one at a time DHCP server (either DHCP server 231 or DHCP server 223) is associated with the BRG 104. It should be noted that lease time provided by the vG 100 and the BRG 104 may differ.

In a variant, the DHCP server 231 of the BRG 104 can only be activated when receiving a new DHCP message from a terminal 106 during the disconnection state. When there is no DHCP request from a terminal 106 during disconnection, the DHCP server 231 of the BRG 104 is not launched.

Upon receipt of a disconnection event during the waiting step 404, the BRG agent 230 can further trigger (step 406) the DHCP server 231 of the BRG 104 to activate the local DHCP service, the DHCP server 223 being concurrently inactivated for the BRG 104.

When the DHCP server 231 of the BRG 104 is activated, the BRG agent 230 can check (step 408) whether or not the connection between the BRG 104 and the vG 100 is established or re-established.

When the connection between the BRG 104 and the vG 100 is established or re-established (corresponding to a connect recovery event), the BRG agent 230 can stop (step 409) operating the DHCP server 231 to abort the local DHCP functionality. At step 409, the BRG agent 230 can further publish the last BRG address configuration. If the connection between the BRG 104 and the vG 100 is still working, the BRG agent 230 can enter in the subscribing step 403 (in case no subscription has been done before).

In case the connection between the BRG 104 and the vG 100 is interrupted, the BRG agent 230 can go back to step 406, wherein the local DHCP server 231 is launched.

It has to be noted that during the subscribing step 403, when the connection between the BRG 104 and the vG 100 is interrupted, the BRG agent 230 can trigger (step 406) the DHCP server 231 of the BRG 104 to activate the local DHCP service.

In addition, after the initialization step 401, when the connection between the BRG 104 and the vG 100 is not established (corresponding to a disconnect state), the BRG agent 230 can activate (step 406) the DHCP server 231 of the BRG 104.

Thus, the present principles rely on a distributed protocol between DHCP agents running on a virtual gateway and a broadband residential gateway, respectively, so that there is one at a time DHCP server running for a given broadband residential gateway. The BRG agent associated with the local DHCP function can act as a fallback option, when the virtual gateway in the cloud is not accessible anymore. It is up to the virtual gateway (respectively the broadband residential gateway) to renew the previous leases offered by the BRG (respectively the vG) while still offering new leases for new connecting devices.

The present principles can offer a seamless and continuous DHCP service when the DHCP server arranged in the virtual gateway is not accessible all the time. It can further ensure:
- a full DHCP configuration modification continuity, not only IP leases,
- no IP address collision/conflict,
- no reduction of the address pool,
- availability of user settings,
- no constraint on the lease time.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method adapted to be implemented at a local network equipment (104) configured to be attached to a remote network equipment (100) through a network connection (101), said remote network equipment running a first network function (220),
wherein the method comprises:
- updating (405) second configuration information with first configuration information received (410) from the remote network equipment (100);
- when the network connection (101) is interrupted,
▪ launching (406) a second network function at the local network equipment (104) based on updated second configuration information;
▪ updating (407) second configuration information from the operation of the second network function running at the local network equipment;
- when the network connection (101) is recovered after interruption:
▪ sending (409) to the remote network equipment (100) last updated second configuration information,
▪ aborting (409) the second network function running at the local network equipment (104).

2. Method according to claim 1, wherein launching (406) the second network function comprises starting a corresponding local network server (231).

3. Method according to claim 1 or 2, comprising subscribing (403), by the local network equipment (104), for receiving first configuration information from the remote network equipment (100).

4. Method according to claims 1 to 3, wherein the first network function (220) and the second network function correspond to a DHCP function.

5. Method according to claim 4, wherein first and second configuration information comprises at least one of the following parameters associated with assigned IP addresses:
- leases,
- subnet,
- subnet-mask,
- default lease time,
- maximum lease time,
- MAC address.

6. Method according to claims 1 to 5, wherein the local network equipment (104) is a residential gateway and the remote network equipment (100) is a virtual gateway.

7. Local network equipment adapted to be attached to a remote network equipment (100) through a network connection (101), said remote network equipment (100) running a first network function (DHCP),
wherein the local network equipment comprises at least one memory (233) and at least one processing circuitry (232) configured to perform:
- updating (405) second configuration information with first configuration information received (410) from the remote network equipment (100);
- when the network connection (101) is interrupted,
▪ launching (406) a second network function at the local network equipment (104) based on updated second configuration information;
▪ updating (407) second configuration information from the operation of the second network function running at the local network equipment;
- when the network connection (101) is recovered after interruption:
▪ sending (409) to the remote network equipment (100) last updated second configuration information,
▪ aborting (409) the second network function running at the local network equipment (104).

8. Local network equipment adapted to be attached to a remote network equipment (100) through a network connection (101), said remote network equipment (100) running a first network function (DHCP),
wherein it comprises:
- a communication interface (102) for receiving first configuration information from the remote network equipment (100);
- a local network agent (230) configured for, when the network connection (101) is interrupted:
▪ updating second configuration information with the received first configuration information and for launching (406) a second network function at the local network equipment (104), based on updated second configuration information
▪ updating (407) second configuration information from the operation of the second network function running at the local network equipment (104),
and wherein when the network connection is recovered after interruption:
- the communication interface (102) is further configured for sending to the remote network equipment (100) last updated second configuration information,
- the local network agent (230) is further configured for aborting the second network function running at the local network equipment (104).

9. Local network equipment according to claim 8, wherein the local network agent (230) is configured to activate a local network server (231) of the local network equipment (104), in order to launch the second network function.

10. Local network equipment according to claim 8 or 9, wherein the local network agent (230) is configured for preliminary subscribing for receiving first configuration information from the remote network equipment (100).

11. Non-transitory program storage device, readable by a computer, tangibly embodying a program of instructions executable by the computer to perform a method adapted to be implemented at a local network equipment configured to be attached to a remote network equipment through a network connection, said remote network equipment running a first network function, wherein said method (400) comprises:
- updating second configuration information with first configuration information received from the remote network equipment;
- when the network connection (101) is interrupted,
▪ launching (406) a second network function at the local network equipment (104) based on updated second configuration information;
▪ updating (407) second configuration information from the operation of the second network function running at the local network equipment;
- when the network connection (101) is recovered after interruption:
▪ sending (409) to the remote network equipment (100) last updated second configuration information,
▪ aborting (409) the second network function running at the local network equipment (104).
